# EUROPEAN PATENT APPLICATION

(11) **EP 4 578 764 A1**
(43) Date of publication of application: **02.07.2025**
(21) Application number: 24221644.8
(22) Date of filing: 19.12.2024
(51) Int. Cl.: B62D 25/08, B62D 21/15

(54) **IMPACT-ABSORBING STRUCTURE**

(30) Priority: 22.12.2023 JP 2023216970
(71) Applicant: TOYOTA JIDOSHA KABUSHIKI KAISHA, Aichi-ken, 471-8571 (JP)
(72) Inventor: MURATA, Soshiro, TOYOTA-SHI, AICHI-KEN, 471-8571 (JP); TOKUDA, Shogo, TOYOTA-SHI, AICHI-KEN, 471-8571 (JP); YAMAGUCHI, Satoshi, TOYOTA-SHI, AICHI-KEN, 471-8571 (JP)
(74) Representative: Cabinet Beau de Loménie

(57) **Abstract**

An impact-absorbing structure is provided with an impact-absorbing portion (16, 27) for a vehicle. The impact-absorbing portion (16, 27) is molded by a die and disposed along an application direction of an impact load. The impact-absorbing portion (16, 27) includes plural series portions (18, 20) and plural ribs (26, 30). The series portions (18, 20) are arranged in a direction intersecting a load application direction, which is the application direction of the impact load. Each series portion (18, 20) is provided with an opening portion (22, 24) that is open in the direction in which the impact-absorbing portion (16, 27) is disposed and a direction intersecting the load application direction. The ribs (26, 30) partition the interior of each opening portion (22, 24) into plural cell portions (28, 32) in the load application direction. Disposition positions in the load application direction of at least some of the ribs (26, 30) are offset between adjacent the series portions (18, 20).

## Description

### BACKGROUND

### Technical Field

The present disclosure relates to an impact-absorbing structure.

### Related Art

WO2022/031991 discloses a technology relating to an energy-absorbing structure in which left and right wheel wells and crushable zones adjacent to the wheel wells are integrally formed by die-casting. In this conventional technology, plural cells that are divided by ribs are provided in each crushable zone, such that impact energy can be absorbed by these cells being crushed.

Beside WO2022/031991, a structure similar to WO2022/031991 at a crush rail, which is recited in Japanese Patent Application National Publication No. 2017-513761, has been disclosed.

In these conventional technologies, when, due to the application of an impact load, a so-called crushable zone is sequentially crushed along an application direction of the impact load starting from a first cell, a large destructive load is generated during crushing of the first cell, and impact energy is absorbed at this stage. Then the impact load is propagated to a second cell, but until the impact load reaches the second cell, the impact load runs freely with little destructive load. When the impact load has been propagated to the second cell, the second cell is crushed; a large destructive load is generated during the crushing of the second cell. Subsequently, crushing and free running are repeated in a manner in which the impact load is propagated to a third cell, with the impact load running freely with little destructive load until the impact load reaches the third cell, and a large destructive load being generated during the crushing of the third cell. Thus, load variations (differences between peaks and troughs) of the destructive load are large.

In consideration of the circumstances described above, an object of the present disclosure is to provide an impact-absorbing structure that may reduce load variations of destructive loads.

### SUMMARY

An impact-absorbing structure according to a first aspect includes an impact-absorbing portion for a vehicle, the impact-absorbing portion being molded by a die and disposed along an application direction of an impact load, wherein the impact-absorbing portion includes: plural series portions arranged in a direction intersecting a load application direction, the load application direction being the application direction of the impact load, and each series portion being provided with an opening portion that is open in the direction in which the impact-absorbing portion is disposed and a direction intersecting the load application direction; and plural ribs that partition an interior of each opening portion into a plurality of cell portions in the load application direction, disposition positions in the load application direction of at least some of the ribs being offset between adjacent series portions.

In the impact-absorbing structure according to the first aspect, the impact-absorbing portion for a vehicle that is molded by a die is provided. The impact-absorbing portion is disposed along the direction of application of an impact load, and includes the plural series portions and the plural ribs.

The plural series portions are arranged plurally in the direction intersecting the load application direction, which is the direction of application of the impact load. For example, when the load application direction is a direction in the vehicle front-and-rear direction, the plural series portions are arranged in the vehicle width direction or the vehicle vertical direction. The respective opening portions are provided at the plural series portions and open out in the direction along which the plural series portions are disposed and a direction intersecting the load application direction.

Meanwhile, the plural ribs are arranged in the load application direction in the opening portions provided at the series portions. Interiors of the opening portions are partitioned into the plural cell portions by the plural ribs. The plural ribs are formed with disposition positions of at least some of the ribs being offset in the load application direction between the adjacent series portions.

Thus, in the present disclosure, when an impact load is applied to the impact-absorbing portion, because the plural cell portions are provided along the load application direction in the impact-absorbing portion, destructive loads are generated in correspondence with the number of cell portions and impact energy is absorbed in stages.

Now, destructive loads may be increased and impact energy absorption may be increased by increasing the size of each cell portion, in which case decelerations G (inertial forces in the load application direction) increase and free running strokes become longer. As a comparative example, for example, when disposition positions of ribs in a load application direction are aligned between plural series portions that are adjacent in a direction intersecting the load application direction, the disposition positions of cell portions in the load application direction are aligned between the adjacent series portions.

Therefore, when an impact load is applied to the impact-absorbing portion, destructive loads are generated in the impact-absorbing portion at substantially the same timings in the load application direction between series portions that are adjacent in the direction intersecting the load application direction. The destructive loads are greater when there are two series portions than when there is one series portion, and consequently the decelerations G increase by corresponding amounts.

By contrast, in the present disclosure the impact-absorbing portion is structured with the plural series portions arranged in the direction intersecting the impact application direction and the disposition positions of at least some of the plural ribs formed in the opening portions provided at the series portions being offset in the load application direction between the adjacent series portions.

Thus, in the present disclosure, when the disposition positions of the ribs are offset in the load application direction between the series portions that are adjacent in the direction intersecting the load application direction, disposition positions of the cell portions in the load application direction are offset between the adjacent series portions. As a result in the present disclosure, when an impact load is applied to the impact-absorbing portion, destructive loads are generated in the impact-absorbing portion at different timings in the series portions that are adjacent in the load application direction.

Therefore, in the present disclosure, a number of times impact energy is absorbed is greater than in a structure in which destructive loads are generated at substantially the same timings in the series portions that are adjacent in the load application direction, the destructive loads may be reduced by corresponding amounts, and the decelerations G may be reduced. Moreover in the present disclosure, because the disposition positions of the ribs are offset between the adjacent series portions, the destructive loads may be reduced compared to a structure in which the disposition positions of ribs are aligned. Thus, load variations of the destructive loads may be reduced.

In an impact-absorbing structure according to a second aspect, in the impact-absorbing structure according to the first aspect, the disposition positions of the ribs in the load application direction are offset between the series portions at least at an upstream side in the load application direction of the impact-absorbing portion.

In the impact-absorbing structure according to the second aspect, because the disposition positions of the ribs in the load application direction are offset between the series portions at least at the upstream side in the load application direction of the impact-absorbing portion, load variations of destructive loads may be reduced at least at the upstream side in the load application direction of the impact-absorbing portion.

In an impact-absorbing structure according to a third aspect, in the impact-absorbing structure according to the first aspect, the cell portions are formed so as to be wider in the load application direction at an upstream side in the load application direction of the impact-absorbing portion than at a downstream side.

In the impact-absorbing structure according to the third aspect, because the cell portions are formed so as to be wider in the load application direction at the upstream side in the load application direction of the impact-absorbing portion than at the downstream side, destructive loads may be made greater at the upstream side in the load application direction than at the downstream side. Thus, when an impact load is applied in the present disclosure, impact energy absorption may be made greater at the upstream side in the load application direction of the impact-absorbing portion than at the downstream side.

In an impact-absorbing structure according to a fourth aspect, in the impact-absorbing structure according to the second aspect, the impact-absorbing portion further includes: a small cell portion at the upstream side in the load application direction of the impact-absorbing portion, the small cell portion being provided by an offset, between the series portions, of the disposition positions of the ribs in the load application direction, and the small cell portion being formed with a size smaller than sizes of the cell portions; and a first weakened portion provided at the small cell portion in a direction intersecting the load application direction, which first weakened portion is to be an origin of deformation when the impact load is applied.

In the impact-absorbing structure according to the fourth aspect, the impact-absorbing portion is structured to further include the small cell portion and the first weakened portion. The small cell portion is provided at the upstream side in the load application direction of the impact-absorbing portion, and is formed, with a size smaller than the sizes of the previously specified cell portions, by an offset occurring in the load application direction between the series portions of the disposition positions of the ribs. Thus, in the present disclosure, positions in the load application direction of end faces of upstream portions of the series portions may be matched up, and when an impact load is applied, the impact load may be propagated substantially equally in the plural series portions structuring the impact-absorbing portion.

The first weakened portion is provided along the direction intersecting the load application direction at the small cell portion. The first weakened portion, for example, has lower stiffness than other regions and is an origin of deformation when an impact load is applied. Compared to the other cell portions excluding the small cell portion, the small cell portion is more resistant to buckling deformation in correspondence with the smaller dimension in the load application direction. Therefore in the present disclosure, deformation of the small cell portion originating at the first weakened portion is promoted by the provision of the first weakened portion in the small cell portion, incompleteness in crushing of the small cell portion is suppressed, and a reduction in impact energy absorption efficiency due to incomplete crushing may be suppressed.

In an impact-absorbing structure according to a fifth aspect, in the impact-absorbing structure according to the first aspect, second weakened portions formed in a direction intersecting the load application direction are provided at an inner face side of the cell portions, which second weakened portions are to be origins of deformation when the impact load is applied.

In the impact-absorbing structure according to the fifth aspect, the second weakened portions are provided at the inner face side of the cell portions. The second weakened portions are formed along a direction intersecting the load application direction and are origins of deformation when an impact load is applied. Thus, in the present disclosure, destruction modes may be made consistent due to deformations of the cell portions originating at the second weakened portions.

In an impact-absorbing structure according to a sixth aspect, in the impact-absorbing structure according to the fifth aspect, the first weakened portion is formed so as to deform more easily than the second weakened portions.

In the impact-absorbing structure according to the sixth aspect, the first weakened portion is formed to be more easily deformed than the second weakened portions. Thus, incomplete crushing of the small cell portion may be suppressed effectively.

In an impact-absorbing structure according to a seventh aspect, in the impact-absorbing structure according to the first aspect, third weakened portions are provided in a direction intersecting the load application direction, the third weakened portions being provided at an outer face side of the impact-absorbing portion at positions corresponding with the ribs, which third weakened portions are to be origins of deformation when the impact load is applied.

In the impact-absorbing structure according to the seventh aspect, the third weakened portions are provided at the outer face side of the impact-absorbing portion. The third weakened portions are provided at positions corresponding with the ribs and are formed such so to be origins of deformation when an impact load is applied. Because the cell portions are partitioned by the ribs and the third weakened portions are provided at the positions corresponding with the ribs, propagation of deformations between cell portions that are adjacent in the load application direction may be prevented.

Thus, in the present disclosure, destruction of plural cell portions in the load application direction in tandem with destruction of a cell portion may be suppressed, and destruction modes of the respective cell portions may be made consistent.

In an impact-absorbing structure according to an eighth aspect, in the impact-absorbing structure according to the first aspect, two of the series portions are provided, first ribs are formed in one of the series portions, and second ribs formed in another of the series portions are offset by half a wavelength relative to the first ribs.

In the impact-absorbing structure according to the eighth aspect, two of the series portions are provided in the impact-absorbing portion. In the present disclosure, because the second ribs formed at the other series portion are offset by half a wavelength from the first ribs formed at the one series portion, generation of a destructive load occurring at the one series portion, free running, and generation of a destructive load occurring at the other series portion occur alternatingly at substantially the same interval with timings that are offset by the half wavelength. Therefore, compared to, for example, a structure in which the second ribs are offset by a third of a wavelength relative to the first ribs, in the present disclosure variations of the destructive loads may be further suppressed, in correspondence with destructive load generation and free running alternatingly occurring at substantially the same intervals.

In an impact-absorbing structure according to a ninth aspect, in the impact-absorbing structure according to the fifth aspect and the seventh aspect, the impact-absorbing portion includes: an upper wall portion extending in the load application direction, a lower wall portion extending in the load application direction, the lower wall portion being disposed at an opposite side of the impact-absorbing portion from the upper wall portion, and a side wall portion extending in the load application direction, the side wall portion linking one end portion of the upper wall portion with one end portion of the lower wall portion, and: the third weakened portions are provided at the upper wall portion and the lower wall portion; and fourth weakened portions formed in a direction intersecting the load application direction are provided at the side wall portion, the fourth weakened portions being formed between the third weakened portions and positions corresponding with the second weakened portions in the load application direction, which fourth weakened portions are to be origins of deformation when the impact load is applied.

In the impact-absorbing structure according to the ninth aspect, the impact-absorbing portion is structured with the upper wall portion, the lower wall portion and the side wall portion. The upper wall portion and lower wall portion extend in the load application direction, and the one end portion of the upper wall portion is linked with the one end portion of the lower wall portion by the side wall portion. The third weakened portions are provided at the upper wall portion and the lower wall portion, and the fourth weakened portions are provided at the side wall portion. The fourth weakened portions are provided between positions corresponding with the second weakened portions in the load application direction and the third weakened portions. The fourth weakened portions are formed along a direction intersecting the load application direction, and are formed so as to be origins of deformation when an impact load is applied.

Because the third weakened portions are provided as described above, propagation of deformations between adjacent cell portions by the ribs may be prevented. In the present disclosure, because the fourth weakened portions are provided at the side wall portion of the impact-absorbing portion, deformations of the cell portions originate at the fourth weakened portions between the second weakened portions and third weakened portions, and incomplete crushing around the ribs may be suppressed.

In an impact-absorbing structure according to a tenth aspect, in the impact-absorbing structure according to the first aspect, the impact-absorbing portion is molded by casting.

In the impact-absorbing structure according to the tenth aspect, because the impact-absorbing portion is molded by casting, freedom of design of the shape of the impact-absorbing portion is greater than for, for example, a structure molded by extrusion molding, in addition to which fabrication efficiency is improved.

In an impact-absorbing structure according to an eleventh aspect, in the impact-absorbing structure according to the first aspect, the impact-absorbing portion is a side member disposed along a vehicle front-and-rear direction at a vehicle width direction end portion, and the side member is integrally molded by casting with a wheel well at which a wheel is to be disposed.

In the impact-absorbing structure according to the eleventh aspect, the impact-absorbing portion of the impact-absorbing structure of the first aspect is the side member, and this side member is formed integrally with the wheel well by the casting. Therefore in the present disclosure, fastenings for fastening the side member to the wheel well are unnecessary, and a number of components may be reduced.

In an impact-absorbing structure according to a twelfth aspect, in the impact-absorbing structure according to the first aspect, the impact-absorbing portion is each of left and right side members disposed along a vehicle front-and-rear direction at both vehicle width direction end portions, and the side members are integrally molded by casting with wheel wells at which left and right wheels are to be disposed and a cross member linking the left and right wheel wells.

In the impact-absorbing structure according to the twelfth aspect, the impact-absorbing portions are the left and right side members, and these left and right side members, the left and right wheel wells and the cross member linking the left and right wheel wells are molded integrally by casting. Therefore in the present disclosure, fastenings for fastening the side members to the wheel wells and for fastening the left and right wheel wells to the cross member are unnecessary, and a number of components may be reduced further.

As described above, an impact-absorbing structure according to the present disclosure may reduce load variations of destructive loads.

### BRIEF DESCRIPTION OF THE DRAWINGS

An exemplary embodiment of the present disclosure will be described in detail based on the following figures, wherein:
Fig. 1 is a perspective view, seen diagonally from an upper side of a vehicle front-left side, that schematically shows an example of principal portions of a vehicle front portion including a front side member in which an impact-absorbing portion according to a present exemplary embodiment is employed.
Fig. 2 is a perspective view, seen diagonally from the front side of a vehicle width direction outer side, of the front side member in which the impact-absorbing portion according to the present exemplary embodiment is employed.
Fig. 3 is a perspective view, seen diagonally from the upper side of the vehicle width direction inner side, of the front side member in which the impact-absorbing portion according to the present exemplary embodiment is employed.
Fig. 4 is a side view, seen from the vehicle width direction outer side, of the front side member in which the impact-absorbing portion according to the present exemplary embodiment is employed.
Fig. 5 is a side view, corresponding with Fig. 4, of a first variant example of the front side member in which the impact-absorbing portion according to the present exemplary embodiment is employed.
Fig. 6 is a sectional view cut along line A-A' shown in Fig. 2.
Fig. 7 is a graph according to CAE analysis showing relationships between destructive loads and stroke lengths when an impact load is applied to impact-absorbing portions.
Fig. 8 is a side view, corresponding with Fig. 4, of a second variant example of the front side member in which the impact-absorbing portion according to the present exemplary embodiment is employed.
Fig. 9 is a side view, corresponding with Fig. 4, of a third variant example of the front side member in which the impact-absorbing portion according to the present exemplary embodiment is employed.

### DETAILED DESCRIPTION

Below, an impact-absorbing structure according to an exemplary embodiment of the present disclosure is described using the attached drawings. Herein, the arrow FR that is shown where appropriate in the drawings indicates a vehicle front-and-rear direction front side, the arrow UP indicates a vehicle vertical direction upper side, and an arrow LH indicates a vehicle width direction left side, indicating a vehicle width direction outer side in the present exemplary embodiment. Where descriptions are given below simply using the directions front, rear, upper, lower, left and right, unless otherwise specified, these represent front and rear in the vehicle front-and-rear direction, upper and lower in the vehicle vertical direction, and left and right in the vehicle left-and-right direction (vehicle width direction).

### - Structure of the impact-absorbing structure -

First, structures of the impact-absorbing structure according to the present exemplary embodiment are described.

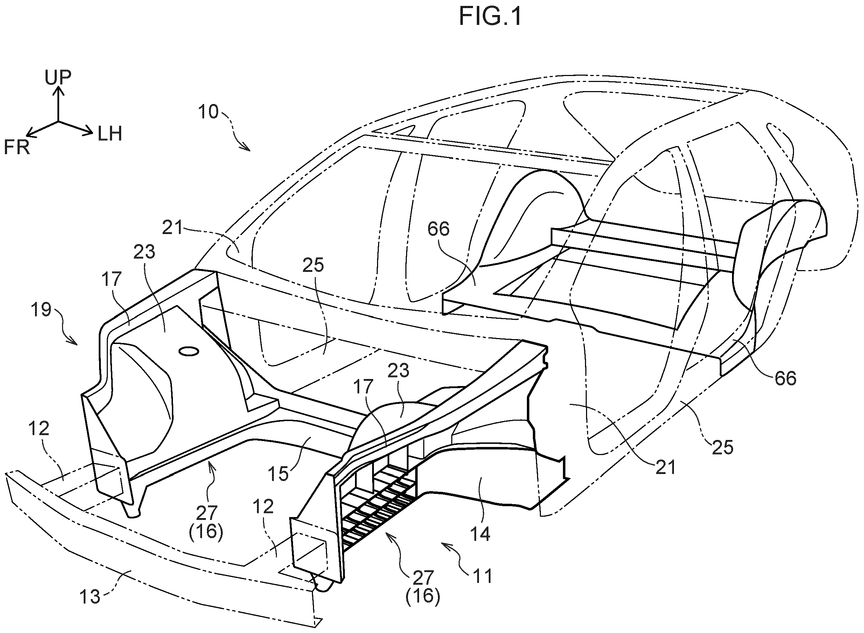

Fig. 1 shows an overall vehicle view depicting a framework of a vehicle 10. For example, although not shown in the drawings, the vehicle 10 is an electric car, a fuel cell car or the like that runs on motive power generated by a power unit. As shown in Fig. 1, an impact-absorbing portion 27 employing an impact-absorbing structure 11 according to the present exemplary embodiment structures a least a portion of, as an example, a front side member 16. The front side member 16 is a framework member at the side of the vehicle 10. In the present exemplary embodiment, the front side member 16 is formed by casting of a material such as an aluminium alloy, a magnesium alloy or the like.

The front side member 16 is disposed at both the left and right sides in the vehicle width direction of a vehicle front portion. The front side members 16 extend in the vehicle front-and-rear direction. The power unit is disposed between the left and right front side members 16. Crash boxes 12 that are capable of absorbing impact energy extend in the vehicle front-and-rear direction at the respective front sides of the left and right front side members 16. A front bumper 13 extends in the vehicle width direction at the front ends of the left and right crash boxes 12.

The front bumper 13 and the crash boxes 12 are here described as being separate components but may be an integrated structure. When the front bumper 13 and crash boxes 12 are integrated thus, the impact-absorbing structure 11 according to the present exemplary embodiment may be employed at the described crash boxes 12, and may be employed at the crash boxes 12 and at the front side member 16.

Wheel wells 14 in which vehicle wheels (not shown in the drawings) are disposed are provided at the respective rear sides of the left and right front side members 16. The wheel well 14 at the right side and the wheel well 14 at the left side are linked by a cross member 15. In the present exemplary embodiment, the left and right front side members 16, the left and right wheel wells 14 and the cross member 15 are molded integrally by casting.

An apron upper member 17 is disposed at the upper side in the vehicle vertical direction at the outer side in the vehicle width direction of each front side member 16. The apron upper member 17 is a framework member that structures the framework at the side of an upper portion of a vehicle body front portion 19. The apron upper member 17 extends in the vehicle front-and-rear direction along the front side member 16, and a rear end portion of the apron upper member 17 is joined to a front pillar 21. A suspension tower 23 is formed integrally with the apron upper member 17. A rocker 25 that extends in the vehicle front-and-rear direction and structures the framework at a vehicle body side portion is provided at the rear side in the vehicle front-and-rear direction of the wheel well 14.

Now, the impact-absorbing portion 27 at which the impact-absorbing structure 11 is employed is described.

In the present exemplary embodiment, the front side member 16 is structured by the impact-absorbing portion 27. Accordingly, in the following descriptions the impact-absorbing portion 27 is referred to and described as the front side member 16.

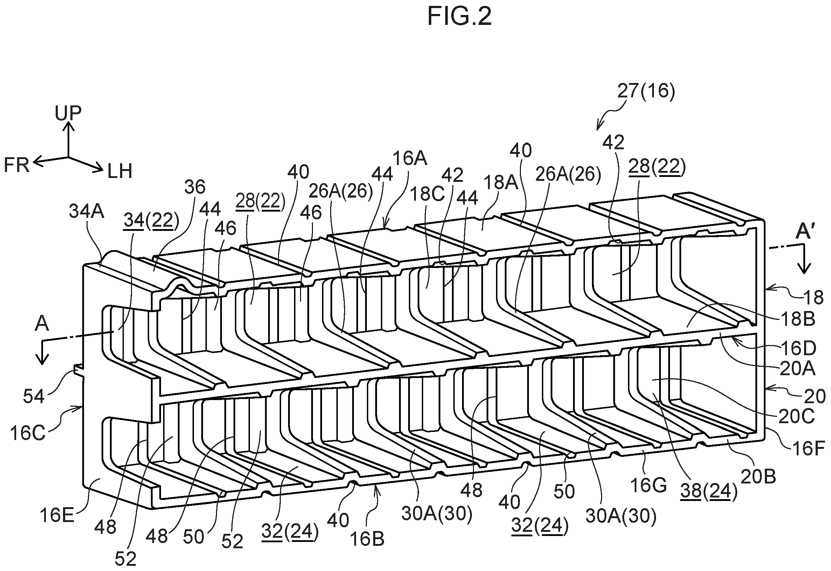

As shown in Fig. 2, in the present exemplary embodiment the front side member 16 extends in the vehicle front-and-rear direction as mentioned above (which is an application direction of an impact load (below referred to as "the load application direction")). The front side member 16 is structured to include an upper wall portion 16A, a lower wall portion 16B and an inner wall portion 16C. The inner wall portion 16C is disposed at the inner side in the vehicle width direction (a direction intersecting the load application direction), and links one end in the vehicle width direction of the upper wall portion 16A with one end in the vehicle width direction of the lower wall portion 16B. Although not shown in the drawings, the inner wall portion 16C may be specified so as to link the middle in the vehicle width direction of the upper wall portion 16A with the middle in the vehicle width direction of the lower wall portion 16B.

In the present exemplary embodiment, a partition wall 16D is provided at a substantially central portion in the vehicle vertical direction of the front side member 16. Thus, the front side member 16 is structured with two series above and below in the vehicle vertical direction (a direction intersecting the load application direction): an upper level portion (series portion) 18 and a lower level portion (series portion) 20. The upper level portion 18 and the lower level portion 20 are formed with substantially the same sizes.

The upper level portion 18 includes an upper wall portion 18A, a lower wall portion 18B and an inner wall portion 18C, and the lower level portion 20 includes an upper wall portion 20A, a lower wall portion 20B and an inner wall portion 20C. The upper wall portion 18A of the upper level portion 18 structures at least a portion of the upper wall portion 16A of the front side member 16, and the lower wall portion 20B of the lower level portion 20 structures at least a portion of the lower wall portion 16B of the front side member 16. The inner wall portion 18C of the upper level portion 18 and the inner wall portion 20C of the lower level portion 20 structure at least portions of the inner wall portion 16C of the front side member 16.

The lower wall portion 18B of the upper level portion 18 and the upper wall portion 20A of the lower level portion 20 are used in common as the same wall portion (the partition wall 16D). For convenience of description, this is described as the partition wall 16D in descriptions of the front side member 16, as the lower wall portion 18B in descriptions of the upper level portion 18, and as the upper wall portion 20A in descriptions of the lower level portion 20.

Cross-sectional shapes of the upper level portion 18 and lower level portion 20 of the front side member 16 cut in the vehicle width direction (a direction intersecting the load application direction) are provided with respective opening portions 22 and 24 that are formed substantially in "U" shapes of which the outer sides in the vehicle width direction are open.

In the opening portion 22 of the upper level portion 18, plural ribs 26 are provided in the vehicle front-and-rear direction (the load application direction). Cutaway portions 26A formed in substantial "U" shapes that open to the outer side in the vehicle width direction are formed in the ribs 26. Thus, the opening portion 22 is partitioned into plural cell portions 28 by the ribs 26. In the opening portion 24 of the lower level portion 20, similarly to the ribs 26, plural ribs 30 are provided in the vehicle front-and-rear direction. Cutaway portions 30A formed in substantial "U" shapes that open to the outer side in the vehicle width direction are formed in the ribs 30. Thus, the opening portion 24 is partitioned into plural cell portions 32 by the ribs 30.

Shapes of the cutaway portions 26A and 32A are not limited to substantial "U" shapes. In the present exemplary embodiment, because the front side member 16 is formed by casting as mentioned above, draft angles are formed at the ribs 26 and 30 and the openings of the cutaway portions 26A and 30A widen toward an opening end 16G.

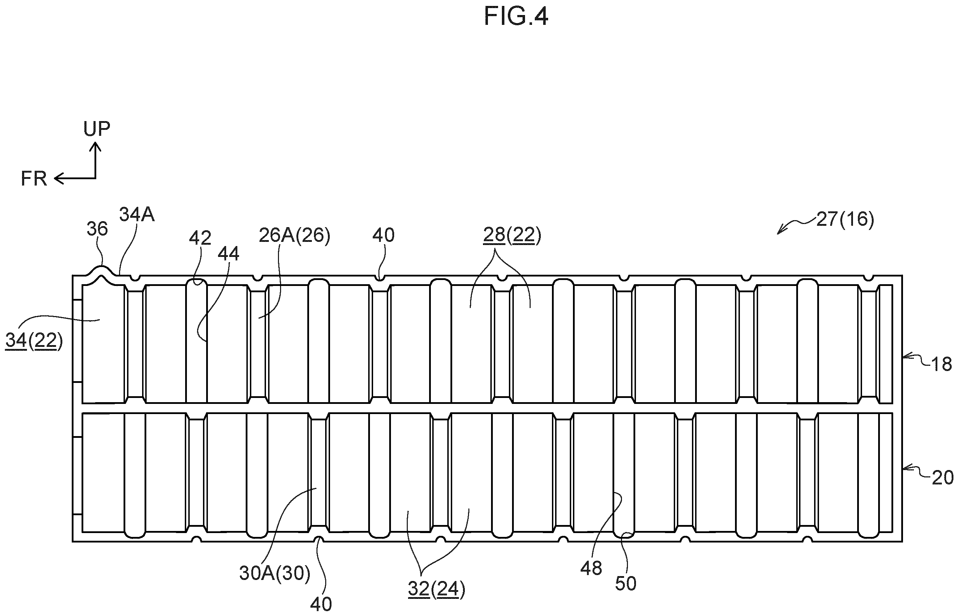

As shown in Fig. 4, in the present exemplary embodiment, disposition positions of the ribs 26 of the upper level portion 18 and the ribs 30 of the lower level portion 20 of the front side member 16 are offset in the length direction (the vehicle front-and-rear direction). The ribs 26 and ribs 30 are offset by, for example, half wavelengths. Accordingly, sizes of the cell portions 28 and cell portions 32 disposed above and below are substantially the same.

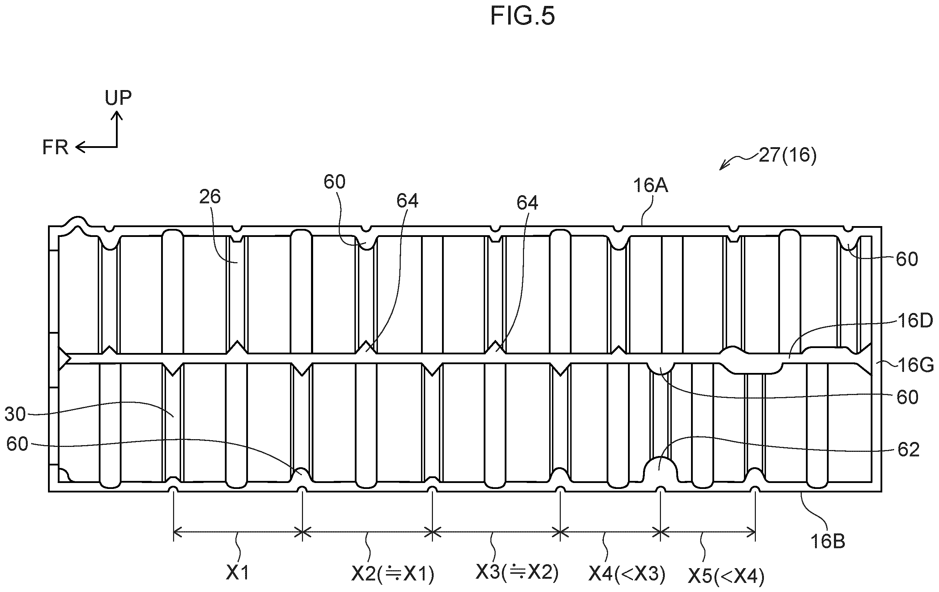

As shown in Fig. 5, the cell portions 28 and 32 are formed so as to be wider in the load application direction at a front end portion side of the front side member 16 (an upstream side in the load application direction of the impact-absorbing portion) than at a rear end portion (the downstream side). For example, dimensions X of the cell portions 32 in the vehicle front-and-rear direction are specified such that X1 > X5. Excluding the rear portion side of the front side member 16, the dimensions X are specified such that X1 ≈ X2 ≈ X3, and at the rear portion side of the front side member 16, X3 > X4 > X5. However, this is not limiting; sizes of the cell portions in the vehicle front-and-rear direction at the front portion side and rear portion side of the front side member 16 may be adjusted.

As shown in Fig. 2 and Fig. 4, because the ribs 26 and ribs 30 are offset by half wavelengths in the length direction of the front side member 16, a small cell portion 34 with a size about half the size of each cell portion 28 is provided at the front end portion of the upper level portion 18. Thus, a front end face 16E of the upper level portion 18 and the lower level portion 20 is adjusted to be a substantially flush surface.

In the present exemplary embodiment, similarly to the front end portion, a small cell portion 38 with a size about half the size of each cell portion 32 is provided at the rear end portion of the lower level portion 20. Thus, a rear end face 16F of the upper level portion 18 and the lower level portion 20 is formed to be a substantially flush surface. However, with regard to the wheel well 14 (see Fig. 1), the rear end face 16F of the upper level portion 18 and lower level portion 20 need not necessarily be a flush surface.

A protrusion portion (a first weakened portion) 36 is provided along the vehicle width direction at an upper wall portion 34A of the small cell portion 34. The protrusion portion 36 is formed to be curved toward the upper side in a circular arc shape along the vehicle front-and-rear direction. The protrusion portion 36 acts as an origin of deformation when an impact load is applied to the front side member 16 (in the vehicle front-and-rear direction).

Recessed beads (third weakened portions) 40 are formed along the vehicle width direction (a direction intersecting the load application direction) at the outer face side of the upper wall portion 18A of the upper level portion 18 (the upper wall portion 16A of the front side member 16), at positions corresponding with the ribs 26. Each recessed bead 40 is recessed in a plate thickness direction of the upper wall portion 18A, and a sectional shape of the recessed bead 40 cut in a width direction is formed in a circular arc shape. The recessed beads 40 are also formed in the outer face side of the lower wall portion 20B of the lower level portion 20 (the lower wall portion 16B of the front side member 16), at positions corresponding with the ribs 30. These recessed beads 40 are recessed in the plate thickness direction of the lower wall portion 20B.

Thus, where the recessed beads 40 are formed, plate thicknesses of the upper wall portion 18A and lower wall portion 20B are thinner than in a structure in which the recessed beads 40 are not formed, and stiffness is reduced by corresponding amounts, weakening the upper wall portion 18A and lower wall portion 20B. As a result, the recessed beads 40 act as origins of deformation when an impact load is applied to the front side member 16.

Recessed beads (second weakened portions) 42 are formed along the vehicle width direction (a direction intersecting the load application direction) at the inner face side of the upper wall portion 18A, at substantially central portions in the vehicle front-and-rear direction (the load application direction) of the cell portions 28 of the upper level portion 18. Each recessed bead 42 is recessed in the plate thickness direction of the upper wall portion 18A and a sectional shape of the recessed bead 42 cut in a width direction is formed in a circular arc shape.

Recessed beads (second weakened portions) 44 are formed along the vehicle vertical direction (a direction intersecting the load application direction) at the inner face side of the inner wall portion 18C, at the substantially central portions in the vehicle front-and-rear direction of the cell portions 28 of the upper level portion 18. Each recessed bead 44 is recessed in the plate thickness direction of the inner wall portion 18C and a sectional shape of the recessed bead 44 cut in the width direction is formed in a circular arc shape. The recessed beads 44 are formed to be continuous with the recessed beads 42.

Thus, in the regions where the recessed beads 42 and 44 are formed, the plate thicknesses of the upper wall portion 18A and inner wall portion 18C are reduced compared to regions where the recessed beads 42 and 44 are not formed, and stiffnesses are reduced by corresponding amounts, weakening the upper wall portion 18A and inner wall portion 18C. As a result, the recessed beads 42 and 44 act as origins of deformation when an impact load is applied to the front side member 16.

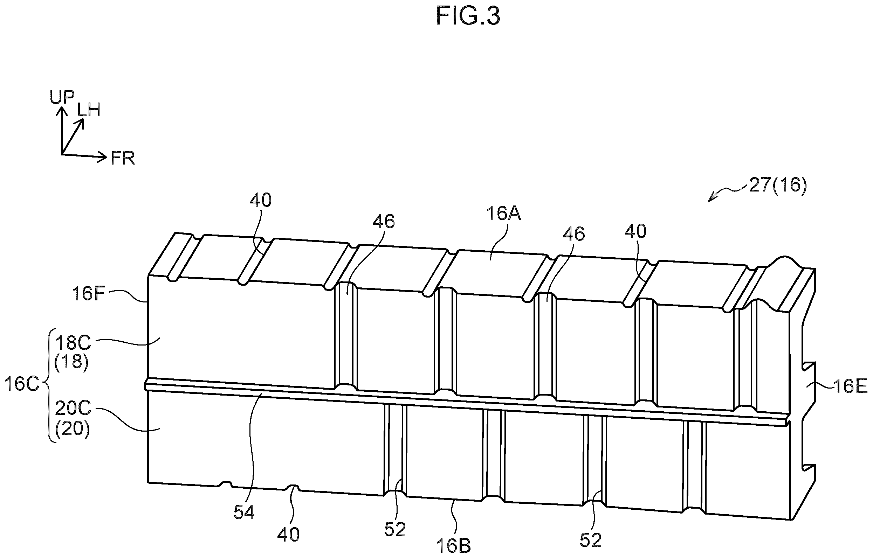

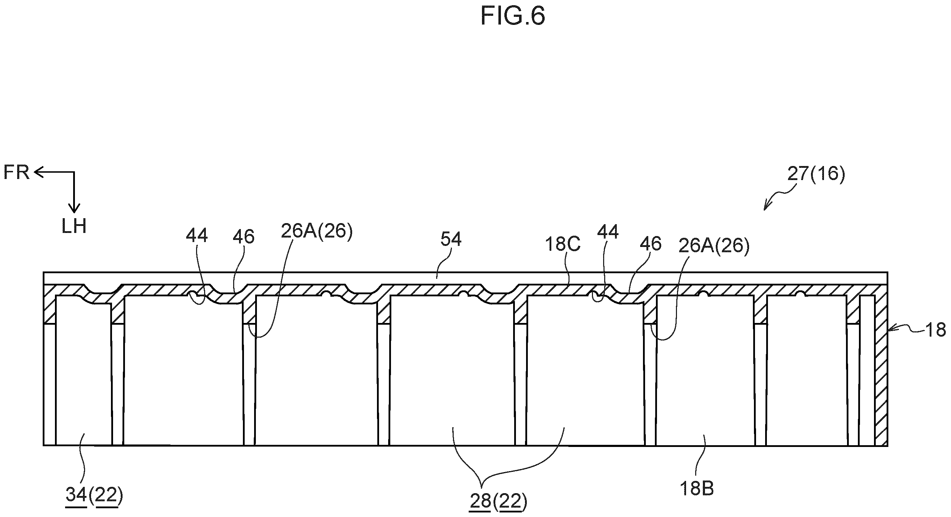

Fig. 6 is a sectional view cut along line A-A' shown in Fig. 2. As shown in Fig. 6, bead portions (fourth weakened portions) 46 are provided along the vehicle vertical direction at the inner wall portion 18C of the upper level portion 18, between the recessed beads 44 and the ribs 26. Each recessed bead 46 is formed to be curved along the vehicle front-and-rear direction in a circular arc shape toward the vehicle width direction outer side (arrow LH). The recessed bead 46 protrudes toward the outer side in the vehicle width direction at the inner face side of the inner wall portion 18C. Therefore, as shown in Fig. 3, the outer face side of the inner wall portion 18C is formed to be recessed toward the outer side in the vehicle width direction, and the recessed bead 46 acts as an origin of deformation when an impact load is applied to the front side member 16.

As shown in Fig. 2 and Fig. 4, similarly to the upper level portion 18, recessed beads (second weakened portions) 48 are formed along the vehicle vertical direction at the inner face side of the inner wall portion 20C, at substantially central portions in the vehicle front-and-rear direction of the cell portions 32 of the lower level portion 20. Each recessed bead 48 is recessed in the plate thickness direction of the inner wall portion 20C. Further, recessed beads (second weakened portions) 50 are formed along the vehicle width direction at the inner face side of the lower wall portion 20B, at substantially central portions in the vehicle front-and-rear direction of the cell portions 32 of the lower level portion 20. Each recessed bead 50 is recessed in the plate thickness direction of the lower wall portion 20B. The recessed beads 50 are formed to be continuous with the recessed beads 48.

Thus, similarly to the upper level portion 18, in the regions where the recessed beads 48 and 50 are formed, the plate thicknesses of the inner wall portion 20C and lower wall portion 20B are reduced compared to regions where the recessed beads 48 and 50 are not formed, and stiffnesses of the inner wall portion 20C and lower wall portion 20B are reduced by corresponding amounts, weakening the inner wall portion 20C and lower wall portion 20B. As a result, the recessed beads 48 and 50 act as origins of deformation when an impact load is applied to the front side member 16.

Again as shown in Fig. 6, bead portions (fourth weakened portions) 52 are formed along the vehicle vertical direction at the inner wall portion 20C of the lower level portion 20, between the recessed beads 48 and the ribs 30. Each recessed bead 52 is formed to be curved along the vehicle front-and-rear direction in a circular arc shape toward the vehicle width direction outer side. Similarly to the recessed beads 46, the recessed beads 52 protrude toward the outer side in the vehicle width direction at the inner face side of the inner wall portion 20C. Therefore, as shown in Fig. 3, the outer face side of the inner wall portion 20C is formed to be recessed toward the outer side in the vehicle width direction, and each recessed bead 52 acts as an origin of deformation when an impact load is applied to the front side member 16.

The inner wall portion 16C of the front side member 16 includes the inner wall portion 18C of the upper level portion 18 and the inner wall portion 20C of the lower level portion 20. A rib 54 with a substantially rectangular shape protruding to the inner side in the vehicle width direction is provided between the inner wall portion 18C of the upper level portion 18 and the inner wall portion 20C of the lower level portion 20, on a line of extension of the partition wall 16D (see Fig. 2).

### - Operation and effects of the impact-absorbing structure -

Now, operation and effects of the impact-absorbing structure according to the present exemplary embodiment are described.

As shown in Fig. 2, in the present exemplary embodiment, the front side member 16 serving as an impact-absorbing portion that is molded by casting in a die extends along the vehicle front-and-rear direction (the length direction, which is the load application direction), and includes the upper level portion 18 and lower level portion 20, which serve as plural series portions, and the plural ribs 26 and 30. The upper level portion 18 and lower level portion 20 are arranged above and below in the vehicle vertical direction, and the ribs 26 and 30 are plurally arranged in the vehicle front-and-rear direction inside, respectively, the upper level portion 18 and the lower level portion 20 (the opening portions 22 and 24). The interiors of the upper level portion 18 and lower level portion 20 are partitioned into the plural cell portions 28 and 32 by the ribs 26 and 30.

Thus, in the present exemplary embodiment, because the plural cell portions 28 and 32 are provided along the vehicle front-and-rear direction in the upper level portion 18 and lower level portion 20, when an impact load is applied to the front side member 16 (in the vehicle front-and-rear direction), destructive loads are generated in numbers corresponding to the cell portions 28 and 32 and impact energy is absorbed in stages.

In the present exemplary embodiment, the disposition positions of the ribs 26 and the ribs 30 are offset by the half wavelength in the length direction of the front side member 16 (the load application direction).

As a comparative example, for example, in a structure not shown in the drawings in which the ribs 26 of the upper level portion 18 and the ribs 30 of the lower level portion 20 of the front side member 16 are aligned, disposition positions of the cell portions 28 of the upper level portion 18 and the cell portions 32 of the lower level portion 20 are aligned. Consequently, when an impact load is applied to this front side member 16, destructive loads are generated in the upper level portion 18 and lower level portion 20 of the front side member 16 at substantially the same timings in the load application direction, and the decelerations G are larger by corresponding amounts. In this structure, free running timings are also substantially the same in the upper level portion 18 and lower level portion 20.

By contrast in the present exemplary embodiment, as described above, the disposition positions of the ribs 26 of the upper level portion 18 and the disposition positions of the ribs 30 of the lower level portion 20 of the front side member 16 are offset by half wavelengths in the length direction of the front side member 16 (the load application direction). Therefore, the disposition positions of the cell portions 28 of the upper level portion 18 and the cell portions 32 of the lower level portion 20 are offset by the half wavelength in the load application direction.

Consequently in the present exemplary embodiment, in contrast to a structure in which destructive loads are generated at substantially the same timings in the load application direction in the upper level portion 18 and the lower level portion 20, a number of times impact energy is absorbed is increased in the present exemplary embodiment, the destructive loads may be reduced by corresponding amounts, and the decelerations G may be reduced.

In the present exemplary embodiment, when an impact load is applied to the front side member 16, the generation of destructive loads and free running occurring at the upper level portion 18 and the generation of destructive loads and free running occurring at the lower level portion 20 occur alternatingly at substantially the same intervals, at timings offset by half wavelengths.

Therefore, compared to a comparative example that is a structure in which disposition positions of the ribs 30 are offset from the ribs 26 by a third of a wavelength, load variations of the destructive loads may be suppressed in the present exemplary embodiment by an amount corresponding to the generation of destructive loads and free running alternatingly occurring at substantially the same intervals.

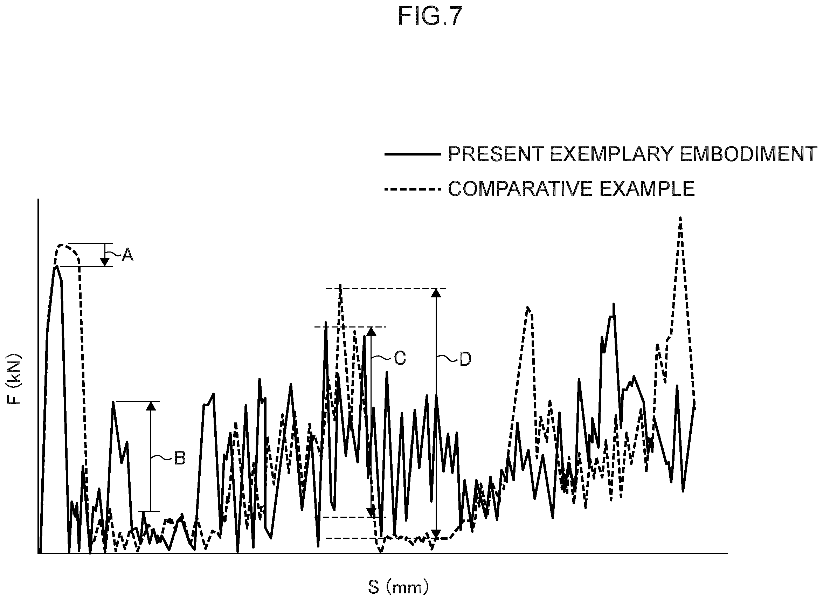

Fig. 7 shows a graph of relationships between destructive loads (kN) and stroke lengths (mm) when an impact load is applied to an impact-absorbing portion, according to CAE (computer-aided engineering) analysis.

Results for the impact-absorbing portion 27 according to the present exemplary embodiment (see Fig. 2) are depicted as a solid line, and results for an impact-absorbing portion according to a comparative example are depicted as a broken line. It can be seen that, as indicated by arrow A in Fig. 7, a destructive load that occurs initially when the impact load is applied to the impact-absorbing portion 27 is reduced in the present exemplary embodiment compared to the comparative example.

In the present exemplary embodiment, as described above, the generation of destructive loads and free running that occur in the upper level portion 18 of the front side member 16 (see Fig. 4) and the generation of destructive loads and free running that occur in the lower level portion 20 (see Fig. 4) alternatingly occur at substantially the same intervals with timings that are offset by a half wavelength. Consequently, as indicated by arrow B, during free running at one series portion a destructive load may occur at the other series portion. That is, "load valleys" may be increased in number in the present exemplary embodiment. Load valleys happen during free running in the comparative example. Thus, load variations of the destructive loads in the present exemplary embodiment, as indicated by arrow C, may be reduced compared to the comparative example, as indicated by arrow D.

In the present exemplary embodiment, as shown in Fig. 4, the number of series portions structuring the front side member 16 is two. Accordingly, relative to the cell portions of one series portion, the disposition positions of the cell portions of the other series portion are offset by a half wavelength. However, a wavelength offset may differ depending on the number of series portions, and a wavelength offset between the cell portions of one series portion and the cell portions of an other series portion may change along the length direction of the front side member 16.

In the present exemplary embodiment, as described above, the disposition positions of the cell portions 28 of the upper level portion 18 and the cell portions 32 of the lower level portion 20 of the front side member 16 are offset by the half wavelength along the length direction of the front side member 16 (the vehicle front-and-rear direction). Accordingly, at the front end portion of the upper level portion 18 of the front side member 16, the small cell portion 34 is provided to fill in the offset of the disposition positions between the cell portions 28 and the cell portions 32.

In the present exemplary embodiment, the positions of the front end face of the upper level portion 18 and the front end face of the lower level portion 20 may be matched up (made to be a flush surface) by the small cell portion 34. Thus, when an impact load is applied, the impact load may be propagated into the upper level portion 18 and the lower level portion 20 substantially equally.

In the present exemplary embodiment, the protrusion portion 36 that is formed so as to reduce stiffness compared to other regions is provided along the vehicle width direction at the upper wall portion 34A of the small cell portion 34. When the impact load is applied to the front side member 16, the protrusion portion 36 acts as an origin of deformation.

Compared to the other cell portions 28, the small cell portion 34 is more resistant to buckling deformation in accordance with its smaller dimension in the vehicle front-and-rear direction. Accordingly, deformation of the small cell portion 34 is promoted with the protrusion portion 36 as the origin. Thus, in the present exemplary embodiment, incompletenesss in crushing of the small cell portion 34 is suppressed, and a reduction in impact energy absorption efficiency due to incomplete crushing may be suppressed.

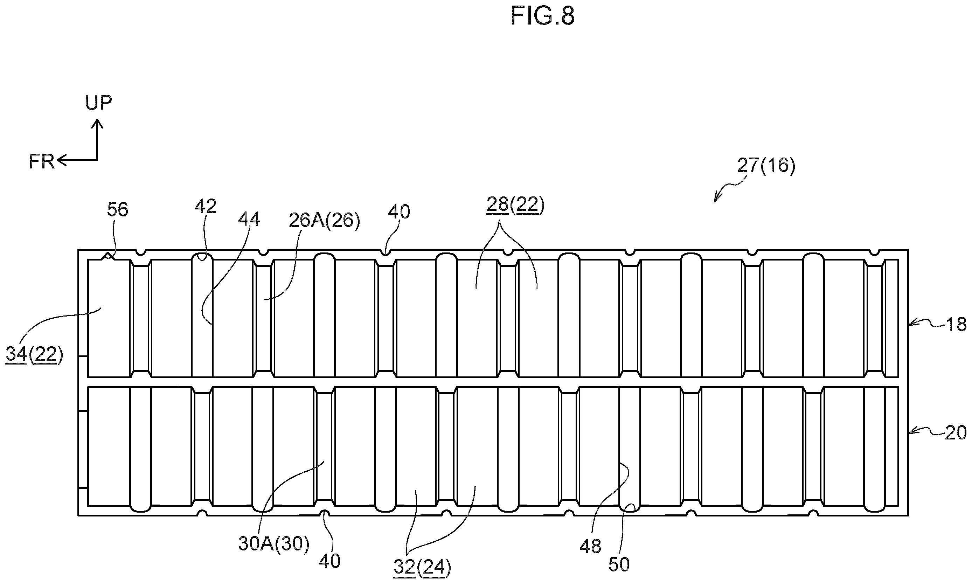

In the present exemplary embodiment, the protrusion portion 36 (the first weakened portion) that is formed to curve toward the upper side in a circular arc shape is provided at the upper wall portion 34A of the small cell portion 34. However, this is not limiting; a portion that acts as an origin of deformation when an impact load is inputted to the front side member 16 in the length direction is sufficient. For example, as illustrated in Fig. 8, a notch portion 56 that is notched in a triangular shape toward the upper side may be formed at the inner face side of the upper wall portion 34A of the small cell portion 34.

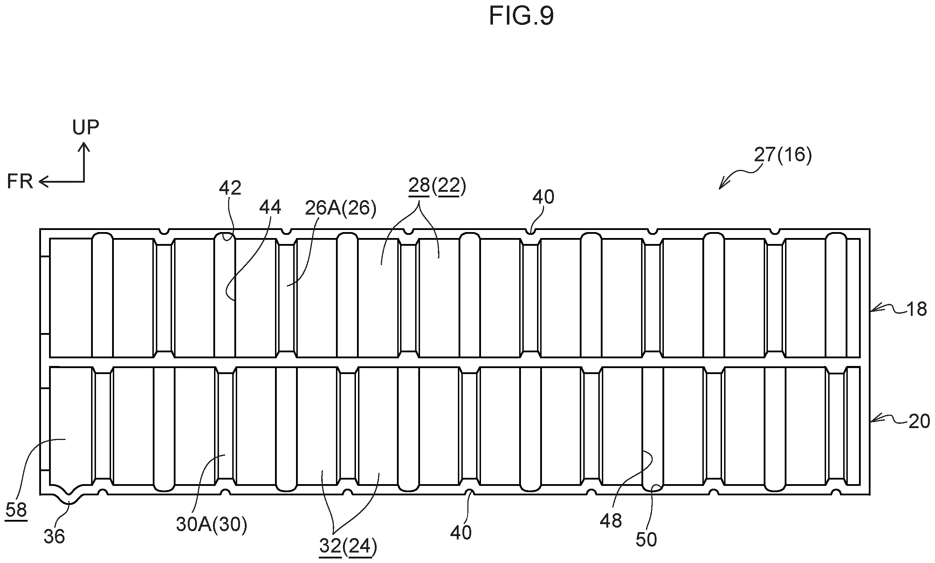

In the present exemplary embodiment, the small cell portion 34 that fills in the offset in disposition positions between the cell portions 28 and the cell portions 32 is provided at the front end portion of the upper level portion 18 of the front side member 16, but this is not limiting. For example, as illustrated in Fig. 9, a small cell portion 58 that fills in the offset in disposition positions between the cell portions 28 and the cell portions 32 may be provided at the front end portion of the lower level portion 20 of the front side member 16. In this case, the protrusion portion (first weakened portion) 36 is provided at the lower wall portion 20B of the small cell portion 58 and is formed to curve in a circular arc shape toward the lower side.

The small cell portion 34 or 58 shown in Fig. 4 or Fig. 9 is provided to fill in an offset in disposition positions of the upper level portion 18 and the lower level portion 20, but is not necessarily required, depending on the shape of the front side member 16.

In the present exemplary embodiment, as shown in Fig. 2, the recessed beads 42 and 44 are formed at the inner face side of the cell portions 28, and the recessed beads 48 and 50 are formed at the inner face side of the cell portions 32. These recessed beads 42, 44, 48 and 50 are respectively formed along directions intersecting the load application direction and act as origins of deformation when an impact load is applied. Thus, in the present exemplary embodiment, destruction modes may be made consistent (as described below) by the cell portions 28 (and cell portions 32) being deformed with the recessed beads 42 and 44 (and recessed beads 48 and 50) acting as origins of deformation.

The protrusion portion 36 is formed so as to deform more easily than the recessed beads 42 and 44. Therefore, in the present exemplary embodiment, the small cell portion 34 is more easily destroyed than the cell portions 28, and incomplete crushing of the small cell portion 34 may be suppressed effectively. However, the protrusion portion 36 is not necessarily required.

In the present exemplary embodiment, the recessed beads 42, 44, 48 and 50 are formed with sectional shapes in the width direction that are circular arc shapes. However, it is sufficient that the recessed beads act as origins of deformation when an impact load is applied; the recessed beads may be formed in triangular shapes. Sectional shapes of the recessed beads 42 and recessed beads 44 and of the recessed beads 48 and recessed beads 50 may vary in depth and the like.

In the present exemplary embodiment, the recessed beads 40 are provided at the outer face side of the front side member 16. The recessed beads 40 are provided at positions corresponding with the ribs 26 and 30, and are formed so as to act as origins of deformation when an impact load is applied.

In the present exemplary embodiment, the respective cell portions 28 and 32 are partitioned by the ribs 26 and 30, and the recessed beads 40 are provided at positions corresponding with the ribs 26 and 30. Therefore, propagations of respective deformations between the cell portions 28 and 32 that are adjacent in the load application direction may be prevented.

Thus, in the present exemplary embodiment, destruction of respective cell portions 28 or 32 in the load application direction in tandem with destruction of a cell portion 28 or 32 may be suppressed, and destruction modes of the cell portions may be made consistent.

In the present exemplary embodiment, the recessed beads 46 are provided at the inner wall portion 18C of the upper level portion 18 between the recessed beads 44 and the ribs 26, and the recessed beads 52 are provided at the inner wall portion 20C of the lower level portion 20 between the recessed beads 48 and the ribs 30. When an impact load is applied to the front side member 16, respective deformations may originate from these bead portions 46 and 52.

In the present exemplary embodiment as described above, because the recessed beads 40 are provided, propagation of deformations between cell portions 28 (or cell portions 32) that are adjacent in the load application direction may be prevented by the ribs 26 (or ribs 30). Furthermore in the present exemplary embodiment, because the recessed beads 46 (or recessed beads 52) are provided at the inner wall portion 16C of the front side member 16, the cell portions 28 (or cell portions 32) are respectively deformed originating from the recessed beads 46 (or recessed beads 52) at the front sides of the ribs 26 (or ribs 30), and incomplete crushing around the ribs 26 (or ribs 30) may be suppressed.

As an example in the present exemplary embodiment, the recessed beads 42 and 44 that are recessed toward the outer side of the cell portions 28 are formed at central portions in the vehicle front-and-rear direction of the cell portions 28 of the upper level portion 18, and the protruding portions (fourth weakened portions) 46 that protrude toward the inner side of the cell portions 28 are formed at the rear sides of the recessed beads 42 and 44. The ribs 26 are formed at the rear ends of the cell portions 28, and the recessed beads 40 that are recessed toward the inner side of the cell portions 28 are formed in correspondence with the ribs 26.

Thus, as an example in the present exemplary embodiment, protruding and recessed portions are formed alternatingly in the vehicle front-and-rear direction in the cell portions 28. Therefore, when an impact load is applied to the front side member 16 and the front side member 16 is axially compressed, the front side member 16 may deform so as to fold up, deformation modes of the front side member 16 may be controlled, and incomplete crushing may be suppressed. However, the recessed beads 42 and 44, the recessed beads 46 and the recessed beads 40 are not necessarily required in the cell portions 28.

As shown in Fig. 5, in the present exemplary embodiment, the cell portions 28 of the upper level portion 18 and the cell portions 32 of the lower level portion 20 are formed so as to be wider in the length direction of the front side member 16 (the load application direction) at the front portion side of the front side member 16 (the upstream side in the load application direction of the impact-absorbing portion) than at the rear end portion (the downstream side).

Therefore, in the present exemplary embodiment, destructive loads may be made larger at the front end portion side of the front side member 16 than at the rear end portion side, and when an impact load is applied, impact energy absorption may be made greater at the front end portion side of the front side member 16 than at the rear end portion side.

In the present exemplary embodiment, sizes of the cell portions 28 of the upper level portion 18 and sizes of the cell portions 32 of the lower level portion 20 along the load application direction are substantially the same, but this is not limiting. The sizes may be suitably altered depending on the destructive loads to be produced, for example, making the cell portions 28 of the upper level portion 18 larger in size than the cell portions 32 of the lower level portion 20 or the like. As a further example, because the cell portions 28 are partitioned by the ribs 26, the ribs 26 are respectively provided at front ends and rear ends of the cell portions 28. However, ribs that raise destructive loads may be separately provided at central portions in the vehicle front-and-rear direction of the cell portions 28.

In the present exemplary embodiment, the front side member 16 is molded by casting. Therefore, freedom of design of the shape of the front side member 16 is greater than if the front side member 16 were, for example, molded by extrusion molding, and fabrication efficiency is improved.

In the present exemplary embodiment, the left and right front side members 16, the left and right wheel wells 14 and the cross member 15 are molded integrally by casting. Therefore in the present exemplary embodiment, fasteners for fastening the left and right front side members 16 to the left and right wheel wells 14 and for fastening the left and right wheel wells 14 to the cross member 15 are unnecessary, and a number of components may be reduced. However, these components need not necessarily be integrated and it will be clear that these components may be molded as respectively separate bodies.

In the present exemplary embodiment, as shown in Fig. 5, the shapes of the ribs 26 and 30 at the opening end 16G of the front side member 16 are different. However, shapes of the front side member 16 in Fig. 2 and Fig. 4 are schematic; circular arc portions 60 and 62 and triangular portions 64, which are described below, are not shown in these drawings.

As shown in Fig. 5, for example, the circular arc portions 60 and 62, which are formed in circular arc shapes along the length direction of the front side member 16, are provided at the upper wall portion 16A and at the lower wall portion 16B of the front side member 16, and the triangular portions 64, which are formed in triangular shapes with the ribs 26 and 30 serving as tip portions, are provided at the partition wall 16D of the front side member 16.

As mentioned above, the front side member 16 of the present exemplary embodiment is formed by casting. Therefore, when the front side member 16 is released from a die, ejector pins (not shown in the drawings) abut against the opening end 16G at the exterior side of the front side member 16 and the front side member 16 is pushed out by these ejector pins.

Accordingly, in the present exemplary embodiment, seating surfaces against which the ejector pins with substantially circular rod shapes abut are required at the opening end 16G at the exterior side of the front side member 16. Therefore, the circular arc portions 60 are provided at the opening end 16G of the front side member 16. The circular arc portions 62 are formed to be larger than the circular arc portions 60. These circular arc portions 62 may be used as fixing seats for fixing members in the vicinity of the front side member 16 to the front side member 16 via fasteners or the like.

The ribs 26 and 30 of the front side member 16 are formed by branch flows branching from a main flow when a molten material flows in the die. Accordingly, the triangular portions 64 are formed at base portions of the ribs 26 and 30 in order to improve metal flow to these branch flows.

In the exemplary embodiment described above, an example is described in which the front side member 16 is formed by casting, but this is not limiting. For example, the front side member 16 may be formed of CFRP (carbon fiber-reinforced plastic) rather than a metal, in which case the front side member 16 is formed by, for example, injection molding.

In the exemplary embodiment described above, the front side member 16 is described, but the present disclosure is applicable to a component other than the front side member 16. For example, the present disclosure may be applied to a rear side member 66 (see Fig. 1), a suspension member or the like that is not shown in the drawings, and to other framework members.

Hereabove, an exemplary embodiment of the present disclosure has been described, but the present disclosure is not limited by this exemplary embodiment. The exemplary embodiment and various variant examples may be used in suitable combinations, and it will be clear that numerous modes may be embodied within a technical scope not departing from the gist of the present disclosure.

### = Additional remarks =

The structures described below may be suitably combined to serve as the impact-absorbing structure according to the present disclosure.

### - Structure 1 -

An impact-absorbing portion for a vehicle is provided, which is molded by a die and disposed along an application direction of an impact load. The impact-absorbing portion includes plural series portions arranged in a direction intersecting a load application direction, the load application direction being the application direction of the impact load. Each series portion is provided with an opening portion that is open in the direction in which the impact-absorbing portion is disposed and a direction intersecting the load application direction.

### - Structure 2 -

The impact-absorbing portion further includes plural ribs that partition the interior of each opening portion into plural cell portions in the load application direction, disposition positions in the load application direction of at least some of the ribs being offset between adjacent the series portions.

### - Structure 3 -

The disposition positions of the ribs in the load application direction are offset between the series portions at least at an upstream side in the load application direction of the impact-absorbing portion.

### - Structure 4 -

The cell portions are formed so as to be wider in the load application direction at an upstream side in the load application direction of the impact-absorbing portion than at the downstream side.

### - Structure 5 -

The impact-absorbing portion further includes: a small cell portion at the upstream side in the load application direction of the impact-absorbing portion, the small cell portion being provided by an offset between the series portions of the disposition positions of the ribs in the load application direction, and the small cell portion being formed with a size smaller than sizes of the cell portions; and a first weakened portion provided at the small cell portion in a direction intersecting the load application direction, which first weakened portion is to be an origin of deformation when the impact load is applied.

### - Structure 6 -

Second weakened portions formed in a direction intersecting the load application direction are provided at an inner face side of the cell portions, which second weakened portions are to be origins of deformation when the impact load is applied.

### - Structure 7 -

The first weakened portion is formed so as to deform more easily than the second weakened portions.

### - Structure 8 -

Third weakened portions are provided in a direction intersecting the load application direction, the third weakened portions being provided at an outer face side of the impact-absorbing portion at positions corresponding with the ribs, which third weakened portions are to be origins of deformation when the impact load is applied.

### - Structure 9 -

Two of the series portions are provided, first the ribs are formed in one of the series portions, and second the ribs formed in the other of the series portions are offset by half a wavelength relative to the first ribs.

### - Structure 10 -

The impact-absorbing portion includes: an upper wall portion extending in the load application direction; a lower wall portion extending in the load application direction, the lower wall portion being disposed at the opposite side of the impact-absorbing portion from the upper wall portion; and a side wall portion extending in the load application direction, the side wall portion linking one end portion of the upper wall portion with one end portion of the lower wall portion. The third weakened portions are provided in the upper wall portion and the lower wall portion. Fourth weakened portions formed in a direction intersecting the load application direction are provided in the side wall portion, the fourth weakened portions being formed between the third weakened portions and positions corresponding with the second weakened portions in the load application direction, which fourth weakened portions are to be origins of deformation when the impact load is applied.

### - Structure 11 -

The impact-absorbing portion is molded by casting.

### - Structure 12 -

The impact-absorbing portion is a side member disposed along a vehicle front-and-rear direction at an end portion of a vehicle width direction, and the side member is integrally molded by casting with a wheel well at which a wheel is to be disposed.

### - Structure 13 -

The impact-absorbing portion is each of left and right side members disposed along a vehicle front-and-rear direction at both end portions of a vehicle width direction, and the side members are integrally molded by casting with wheel wells at which left and right wheels are to be disposed and a cross member linking the left and right wheel wells.

## Claims

1. An impact-absorbing structure (11, 15) comprising an impact-absorbing portion (16, 27) for a vehicle, the impact-absorbing portion (16, 27) being disposed along an application direction of an impact load,
wherein the impact-absorbing portion (16, 27) includes:
a plurality of series portions (18, 20) arranged in a direction intersecting a load application direction, the load application direction being the application direction of the impact load, and each series portion (18, 20) being provided with an opening portion (22, 24) that is open in the direction in which the impact-absorbing portion (16, 27) is disposed and a direction intersecting the load application direction; and
a plurality of ribs (26, 30) that partition an interior of each opening portion (22, 24) into a plurality of cell portions (28, 32) in the load application direction, disposition positions in the load application direction of at least some of the ribs (26, 30) being offset between adjacent series portions (18, 20).

2. The impact-absorbing structure according to claim 1, wherein the disposition positions of the ribs (26, 30) in the load application direction are offset between the series portions (18, 20) at least at an upstream side in the load application direction of the impact-absorbing portion (16, 27).

3. The impact-absorbing structure according to claim 1 or 2, wherein the cell portions (28, 32) are formed so as to be wider in the load application direction at an upstream side in the load application direction of the impact-absorbing portion (16, 27) than at a downstream side.

4. The impact-absorbing structure according to claim 2, wherein the impact-absorbing portion (16, 27) further comprises:
a small cell portion (34, 58) at the upstream side in the load application direction of the impact-absorbing portion (16, 27), the small cell portion (34, 58) being provided by an offset, between the series portions (18, 20), of the disposition positions of the ribs (26, 30) in the load application direction, and the small cell portion (34, 58) being formed with a size smaller than sizes of the cell portions (28, 32); and
a first weakened portion (36, 56) provided at the small cell portion (34, 58) in a direction intersecting the load application direction, which first weakened portion (36, 56) is to be an origin of deformation when the impact load is applied.

5. The impact-absorbing structure according to any of claim 1 to 4, wherein second weakened portions (42, 44, 48, 50) formed in a direction intersecting the load application direction are provided at an inner face side of the cell portions (28, 32), which second weakened portions (42, 44, 48, 50) are to be origins of deformation when the impact load is applied.

6. The impact-absorbing structure according to claims 4 and 5,
wherein the first weakened portion (36, 56) is formed so as to deform more easily than the second weakened portions (42, 44, 48, 50).

7. The impact-absorbing structure according to any of claims 1 to 6, wherein third weakened portions (40) are provided in a direction intersecting the load application direction, the third weakened portions (40) being provided at an outer face side of the impact-absorbing portion (16, 27) at positions corresponding with the ribs (26, 30), which third weakened portions (40) are to be origins of deformation when the impact load is applied.

8. The impact-absorbing structure according to any of claims 1 to 7, wherein two of the series portions (18, 20) are provided, first ribs (26, 30) are formed in one of the series portions (18, 20), and second ribs (26, 30) formed in another of the series portions (18, 20) are offset by half a wavelength relative to the first ribs (26, 30).

9. The impact-absorbing structure according to claim 5 and 7, wherein:
the impact-absorbing portion (16, 27) comprises:
an upper wall portion (16A, 34A) extending in the load application direction,
a lower wall portion (16B) extending in the load application direction, the lower wall portion being disposed at an opposite side of the impact-absorbing portion (16, 27) from the upper wall portion, and
a side wall portion (16C) extending in the load application direction, the side wall portion linking one end portion of the upper wall portion with one end portion of the lower wall portion;
and wherein:
the third weakened portions are provided at the upper wall portion and the lower wall portion; and
fourth weakened portions (46, 52) formed in a direction intersecting the load application direction are provided at the side wall portion, the fourth weakened portions (46, 52) being formed between the third weakened portions (40) and positions corresponding with the second weakened portions (42, 44, 48, 50) in the load application direction, which the fourth weakened portions (46, 52) are to be origins of deformation when the impact load is applied.

10. The impact-absorbing structure according to any of claims 1 to 9, wherein the impact-absorbing portion (16, 27) is molded by a die, preferably by die casting.

11. The impact-absorbing structure according to any of claims 1 to 10, wherein:
the impact-absorbing portion (16, 27) is a side member disposed along a vehicle front-and-rear direction at a vehicle width direction end portion, and
the side member is integrally molded by casting with a wheel well at which a wheel is to be disposed.

12. The impact-absorbing structure according to any of claims 1 to 11, wherein:
the impact-absorbing portion (16, 27) is each of left and right side members (16) disposed along a vehicle front-and-rear direction at both vehicle width direction end portions, and
the side members (16) are integrally molded by casting with wheel wells (14) at which left and right wheels are to be disposed and a cross member (15) linking the left and right wheel wells.
